# EUROPEAN PATENT APPLICATION

(11) **EP 3 166 332 A1**
(43) Date of publication of application: **10.05.2017**
(21) Application number: 16002346.1
(22) Date of filing: 03.11.2016
(51) Int. Cl.: H04R 3/14, H04R 29/00, H04B 1/38, H04W 4/10

(54) **RADIO TRANSDUCER VOLUME BIAS CONTROL METHOD AND APPARATUS**

(30) Priority: 05.11.2015 US 201514933536
(71) Applicant: Harris Corporation, Melbourne, FL 32919 (US)
(72) Inventor: Kripp, Keith, Pittsford, NY 14534 (US); Norris, James A., Fairport, NY 14450 (US); Hamilton, James A., Brighton, NY 14618 (US)
(74) Representative: Schmidt, Steffen J.

(57) **Abstract**

Systems and methods for transducer volume bias control. The methods involve: obtaining an audio signal that is to be output from first and second transducers of an electronic device; and dynamically changing spectral content of the audio signal to at least one of the first and second transducers as a transducer volume level increases and decreases. The first transducer is disposed on a first side of the electronic device. The second transducer is disposed on a second side that is different than the first side of the electronic device. The first and second transducers have imbalanced capabilities.

## Description

### BACKGROUND OF THE INVENTION

### Statement of the Technical Field

This document relates to audio systems. More particularly, this document relates to systems and methods for transducer volume bias control.

### Description of the Related Art

Human beings perceive sound to be spectrally different depending on the relative sound pressure level at which it was heard. Creating a balanced, consistent audio experience for listeners across sound pressure levels requires compensation for these effects. Small form factor electronic devices may contain multiple electro-acoustic transducers, each responsible for the reproduction of a specific band of spectral content. Systems containing more than one transducer will often times include large, high-power transducers for reproduction of low frequency content and smaller, more sensitive transducers for reproduction of high frequency content. As playback volume is increased certain components of these systems may become saturated by the increased signal level.

### SUMMARY OF THE INVENTION

This disclosure concerns systems and methods for transducer volume bias control. The methods involve: obtaining an audio signal that is to be output from first and second transducers of an electronic device; and dynamically changing spectral content of the audio signal to at least one of the first and second transducers as a transducer volume level increases and decreases. The first transducer is disposed on a first side of the electronic device. The second transducer is disposed on a second side that is different than the first side of the electronic device. The first and second transducers have imbalanced capabilities.

In some scenarios, the spectral content is dynamically changed by: diverting higher energy audio content away from a low volume transducer in accordance with a current high transducer volume level; re-assigning frequency content to the first and second transducers based on a requested and detected change in the transducer volume level; re-assigning at least mid-level frequency content to the first and second transducers based on changes in the transducer volume level; and/or varying values of crossover coefficients used by crossover filters to create a signal containing high-range frequencies and a signal containing low-range frequencies, based on changes in the transducer volume level.

The methods may also involve performing the following operations by an electronic circuit (e.g., a processor) disposed within the communication device: processing the audio signal to determine a type of audio contained therein; selecting a set of pre-stored crossover coefficients from a plurality of pre-stored sets of crossover coefficients that is to be used for dynamically changing of the crossover coefficient, based on the type of audio contained in the audio signal; determining a value of a transducer volume level; selecting at least one set of crossover coefficients for each transducer from a plurality of crossover coefficients based on the value of the transducer volume level; communicating the crossover coefficients to crossover filters where the same is to be used to provide the first transducer with a first signal containing low-range frequencies and the second transducer with a second signal containing high-range frequencies; detecting an adjustment in the value of the transducer volume level; and/or dynamically changing the crossover coefficients in response to said adjustment and based on a new value of the transducer volume level. The first and second signals may be converted to analog signals and amplified prior to being provided to the first and second transducers.

### BRIEF DESCRIPTION OF THE DRAWINGS

Embodiments will be described with reference to the following drawing figures, in which like numerals represent like items throughout the figures, and in which:
FIG. 1 is a front perspective view of an exemplary communication device.
FIG. 2 is a back perspective view of the exemplary communication device shown in FIG. 1.
FIG. 3 is a block diagram of electronic components of the exemplary communication device shown in FIGS. 1-2.
FIGS. 4A-4B (collectively referred to herein as "FIG. 4") provide a flow diagram of an exemplary method for transducer volume bias control.

### DETAILED DESCRIPTION

The invention is described with reference to the attached figures. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operations are not shown in detail to avoid obscuring the invention. The invention is not limited by the illustrated ordering of acts or events, as some acts may occur in different orders and/or concurrently with other acts or events. Furthermore, not all illustrated acts or events are required to implement a methodology in accordance with the invention.

It should also be appreciated that the terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Further, unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In general, the present solution employs a hardware and/or software architecture that allows the regulation of spectral energy content that is provided to different transducers in an audio system. Conventional portable communication devices have a single speaker from which all audio is output at all times. In order to decrease the form factor of portable communication devices while still preserving audio intelligibility and audio characteristics (e.g., loudness), at least two transducers are provided with small-form factor communication devices. A first speaker is a low power speaker which is disposed on the front of the small-form factor communication devices, while a second speaker is a high power speaker which is disposed on the rear of the small-form factor communication devices. Once multi-transducers are introduced into a communication device, an issue arises as to whether audio is output from all speakers at all times or whether audio is output from a particular speaker at given times.

Conventional home theater systems address this issue by diverting the spectral energy to the transducers that are meant to output the same. For example, a tweeter transducer of a home theater system outputs high frequency audio and a woofer transducer outputs low frequency audio. The present solution employs a similar concept. The difference between the present solution and that of conventional home theater systems is that as a user increases the transducer volume the spectral content to either transducer (i.e., the tweeter transducer and the woofer transducer) is dynamically changed. This dynamic feature of the present solution allows (a) the preservation of a user's audio experience at a fixed location in space (e.g., the front of the audio system where user interface components are located) and (b) the protection of the low volume speaker(s) from damage at relatively high volume levels. Feature (b) is achieved by dynamically diverting higher energy audio content away from the low volume speaker(s) in accordance with a current high volume level set by a user of the audio system.

Accordingly, the present document generally concerns systems and methods for (a) protecting transducers in an audio system outputting audio at a high volume and (b) compensating for changes in a human auditory response as a transducer (or speaker) volume is adjusted. Notably, conventional audio systems do not address features (a) and (b). As such, the audio systems described herein are superior to conventional audio systems, such as those disclosed in the background section of the present document.

The present solution can be employed in a number of different applications. For example, the present solution can be used to preserve the intelligibility of audio at a specific position. At a low transducer volume, a human's hearing is not sensitive to low frequency content. However, a human's hearing becomes more sensitive to low frequency content as a transducer volume is increased. By dynamically re-assigning frequency content to the speakers based on volume level, low frequency audio is perceived by a human as mid-frequency audio when a transducer level is increased. In this way, a user's audio experience is customizable across a volume curve. Notably, conventional audio systems do not provide such a customizable audio experience across a volume curve, but rather a fixed audio experience regardless of transducer volume level and audio content type (e.g., human speech and music), i.e., the same frequency content is output from each transducer at all volume levels.

Static crossover filters exist across a wide variety of products in the audio industry. The static crossover filters are typically used to direct spectral content for which specific components of the system are optimized to reproduce for increased system efficiency and optimal listening experience. For example, low frequency content is provided to a woofer transducer at all volume levels. High frequency content is provided to a tweeter transducer at all volume levels. In some scenarios, the low frequency range is 40 Hz to 1 kHz, while the high frequency range is 2 kHz to 20 kHz. Notably, typical Land Mobile Radio ("LMR") audio is band-limited to 200-4 KHz. Thus, in other scenarios, the total frequency range may be selected within these LMR bounds. In these audio systems, transducer protection is typically achieved with fuse circuits or through active monitoring and regulation of energy at the system transducers in software.

In contrast to these conventional audio systems, the present solution employs dynamic crossover filters, namely a first dynamic crossover filter for a first speaker and a second dynamic crossover filter for a second speaker. The first and second dynamic crossover filters are collectively designed to dynamically re-assign at least mid-level frequency content to the first and second speakers based on a current volume level set by a user thereof. For example, at a first volume level, a crossover coefficient is set to 600 Hz. As such, audio with a frequency equal to or less than 600 Hz is supplied to the first speaker (e.g., a woofer speaker). Audio with a frequency greater than 600 Hz is supplied to the second speaker (e.g., a tweeter speaker). Thereafter, a user manually changes the volume level of the speakers to a second volume level. In response, the crossover coefficient is dynamically changed to 1200 Hz. In effect, audio with a frequency equal to or less than 1200 Hz is supplied to the woofer speaker. Audio with a frequency greater than 1200 Hz is supplied to the tweeter speaker. The present solution is not limited to the particulars of this example.

One reason dynamic crossover filters are employed by the present solution is that the primary and secondary transducers are not well matched (i.e., the transducers do not hit their performance limits at about the same time as may be the case in conventional audio systems). In some small-form factor communication devices, the primary transducer (e.g., the tweeter transducer) is undersized for what would normally be used to achieve a desired acoustic performance of the communication device. In effect, these small-form factor communication devices have a dramatic imbalance between the capabilities of the primary and secondary transducers. These capabilities include, but are not limited to, a resonant frequency, a frequency response, a response time, reliability, sensitivity, pressure rating, sound quality, peak voltage limit, average voltage limit, thermal power limit, loudness, audio intelligibility and/or sound amplification. The present solution provides a means to compensate for the transducer performance imbalance so as to ensure that a satisfactory user experience for audio output from the small-form factor communication devices is provided at all times.

Notably, the primary and secondary transducers are not co-axial, co-planar or co-located with each other. Thus in some cases, the audio signal to be output from the first speaker may be delayed in time or shifted in phase so as to account for the physical distance between the two speakers. In effect, the audio may be perceptually altered to appear as only being output from the primary speaker at all volume levels.

### Exemplary Communication Systems

The present invention can be implemented in a variety of audio systems and communication systems (e.g., a portable radio). A discussion is provided below regarding how the present invention can be implemented in an exemplary portable radio. The present invention is not limited to portable radio applications.

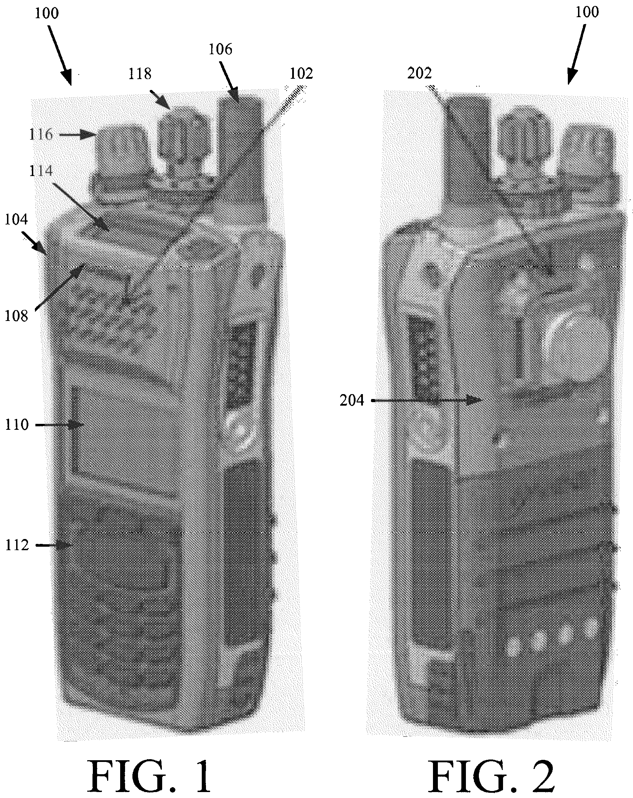

Referring now to FIGS. 1-2, there are provided front and back perspective views of an exemplary communications device **100** employing the present invention. The communications device **100** can include, but is not limited to, a portable radio (e.g., a land mobile radio), a vehicular radio, a mobile phone, a cellular phone, or other wireless communication device.

As shown in FIGS. 1-2, the communication device **100** comprises transducers **102, 202,** an antenna **106,** a microphone **104,** displays **110, 114, a** control panel (or keypad) **112,** and rotary knobs **116, 118.** Each of the listed components is well known in the art, and therefore will not be described in detail herein. Still, it should be understood that a first transducer **102** is disposed on a front surface **108** of the communication device **100** so as to reside on the same side of the communication device **100** as the control panel **112.** A second transducer **202** is disposed on a back surface **204** of the communication device **100** so as not to require an increase in the size or a change in the form-factor of the communication device. The transducer volume is manually adjustable via rotary knob **116,** control panel **112** and/or display **110.** In the control panel scenarios, a user can select a volume level from a menu of volume levels contained in a Graphical User Interface ("GUI") displayed on display **110.** In other scenarios, display **110** is a touch-screen display via which a user can select the volume level from the menu.

In some scenarios, the first transducer **102** comprises a woofer transducer (e.g., a 4 Ohm speaker), i.e., a transducer that produces low frequency sounds. The second transducer **202** comprises a tweeter transducer (e.g., 8, 16 or 32 Ohm speaker), i.e., a transducer capable of reproducing signals with extended bandwidth compared to the woofer transducer. Notably, there is a dramatic imbalance between the capabilities of the two transducers **102, 202.**

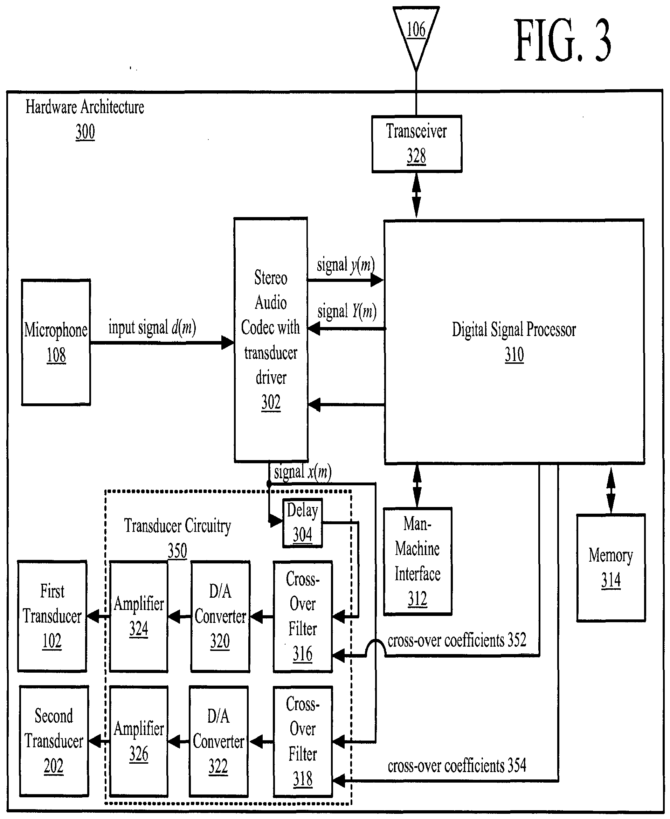

Referring now to FIG. 3, there is provided a block diagram of an exemplary hardware architecture **300 of** the communication device **100.** As shown in FIG. 3, the hardware architecture **300** comprises the first transducer **102** and the second transducer **202.** The hardware architecture **300** also comprises a Stereo Audio Codec ("SAC") **302** with a speaker driver, a transceiver **328,** antenna element **106,** and a Man-Machine Interface ("MMI") **312.** The MMI **312** can include, but is not limited to, radio controls, on/off switches or buttons, a keypad **112,** a display device **110, 114,** and a volume control **115.** The hardware architecture **300** is also comprised of a Digital Signal Processor ("DSP") **310,** a memory device **314,** and transducer circuitry **350.** Each of the listed components **302-314** and **350** can be implemented in hardware and/or software.

The microphone **104** is electrically connected to the SAC **302.** The SAC **302** is generally configured to sample input signals coherently in time from input signal *d(m)* channel. As such, the SAC **302** can include, but is not limited to, an Analog-to-Digital ("A/D") converter that samples at a given sample rate (e.g., eight or more kilo Hertz). The SAC **302** can also include, but is not limited to, a D/A converter, drivers for the transducers **102, 202,** amplifiers, and DSPs. The DSPs can be configured to perform equalization filtration functions, audio enhancement functions, microphone level control functions, and digital limiter functions. The DSPs can also include a Phase Lock Loop ("PLL") for generating accurate audio sample rate clocks for the SAC **302**. In some scenarios, the DSP comprises non-transitory machine readable media or code which causes the DSP to perform certain operations as described herein.

The SAC **302** is electrically connected to the DSP **310** and the transducer circuitry **350**. The DSP **310** is electrically connected to the SAC 302, the **MMI 312**, and the transceiver **328**. The DSP **310** is generally configured to provide an interface between the components **302**, **312**, **328**. In this regard, the DSP **310** is configured to receive signal *y(m)* from the SAC **302,** process the received signal, and forward the processed signal ***Y(m)*** to the SAC **302**.

The transceiver **328** is generally a unit which contains both a receiver (not shown) and a transmitter (not shown). Accordingly, the transceiver **328** is configured to communicate signals to the antenna element **106** for communication to a base station, a communication center, or another communication device. The transceiver **328** is also configured to receive signals from the antenna element **106**.

As shown in FIG. 3, the transducer circuitry **350** is provided between the SAC **302** and the transducers **102, 202**. The transducer circuitry **350** implements the present solution for dynamically re-assigning frequency content to the transducers based on volume level. In this regard, the transducer circuitry **350** comprises a delay **204,** crossover filters **316, 318,** Digital-to-Analog ("D/A") converters **320, 322,** amplifiers **324, 326,** and transducers **102, 202**.

During operation, an audio signal *x(m)* is communicated from the SAC **302** (or DSP via the SAC) to crossover filter **318** and crossover filter **316** via delay **304**. As noted above, the first and second transducers **102, 202** are not co-axial, co-planar or co-located with each other. Thus, the audio signal to be output from the first transducer **102** is delayed in time by delay **304** so that audio output from the transducers **102, 202** perceptually appears as only being output from the first transducer.

Each crossover filter **316, 318** processes the audio signal to create a plurality of signals consisting of separated bands of high-range, mid-range and/or low-range frequencies. The different bands of frequencies feed the different transducers. For example, the audio in the low-range frequency band (e.g., 100 Hz - 1 kHz) is provided to the first transducer **102** via D/A converter **320** and amplifier **324**. Audio in a lower portion of the mid-range frequency band (e.g., 1 kHz - 1.5 kHz) may also be provided to the first transducer **102**. In contrast, audio in the high-range frequency band (e.g., 2 kHz - 20 kHz) is provided to the second transducer **202** via D/A converter **322** and amplifier **326**. Audio in an upper portion of the mid-range frequency band (e.g., 1.5 kHz - 2 kHz) may also be provided to the second transducer **202**.

The signals are created by the crossover filters **316, 318** in accordance with crossover coefficients **352, 354** provided thereto by the DSP **310**. The crossover coefficients **352, 354** specify which frequency ranges should be employed for the transducers, respectively. The crossover coefficients **352, 354 are** selected or generated by the DSP **310** based on the current transducer volume level **set by the** user of the communication device **100**. In this way, the spectral content provided to the transducers **102, 202** is dynamically changed during operation of the communication device **100**.

The audio signals are then communicated from the crossover filters to the D/A converters **320, 322**. The D/A converters **320, 322** convert digital data into analog signals. The analog signals are then sent to the amplifiers **324, 326**. Each amplifier **324, 326** is generally configured to increase the amplitude of an audio signal received from the respective D/A converter. Each amplifier **324, 326** is also configured to communicate the amplified audio signal to the respective transducer **102, 202**. Each transducer **102, 202 is** generally configured to convert the amplifier audio signal to sound. In this regard, each transducer **102, 202** can include, but is not limited to, an electro-acoustic transducer and filters.

In some scenarios, the crossover filters **316, 318** are implemented in software, hardware or a combination of software and hardware. In the hardware scenarios, the crossover filters **316, 318** comprise passive components such as resistors, inductors and capacitors. The crossover filters **316, 318** may be designed to process digital data and/or analog data. In the case of analog data processing, the updating of digital crossover coefficients may be replaced by the electronic switching of various additional discrete components into the signal path in order to achieve the desired audio band splits. Also, the crossover filters **316, 318** and/or the DSP **310** may determine the crossover coefficients from pre-stored information or alternatively generate the same during operation of the communication device. The crossover coefficients can be generated once target crossover frequencies have been selected. Target crossover frequencies may be chosen via consideration of transducer power ratings, transducer resonant frequencies, transducer frequency responses, or desired system bandwidth. Crossover frequencies may be dynamically chosen based on the nature of the current signals in the system (e.g., music or speech). In some scenarios, the crossover coefficients are generated using a computation program (e.g., MATLAB or PYTHON) and its associated libraries of functions.

### Exemplary Methods For Bias Control Of Transducer Volume

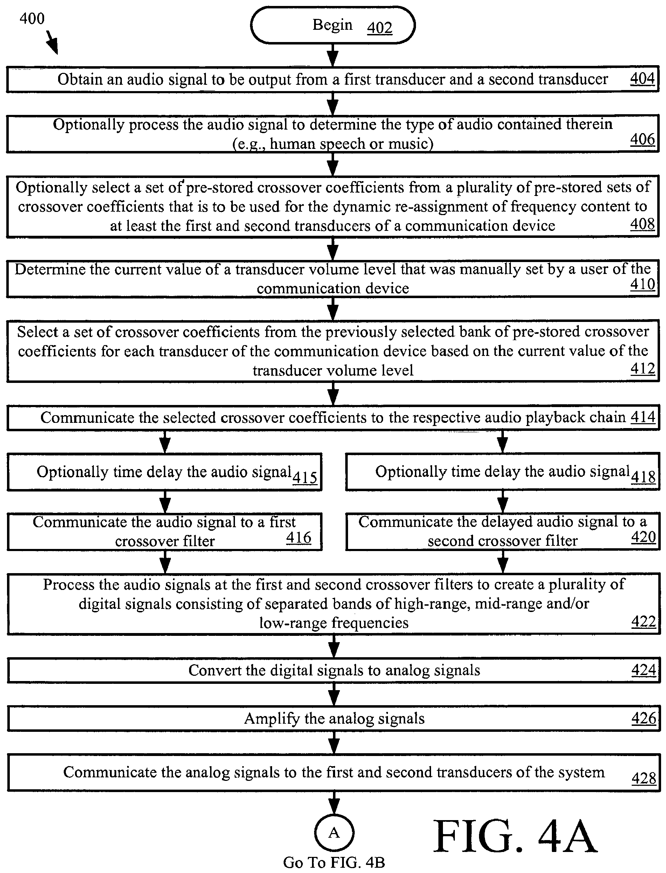

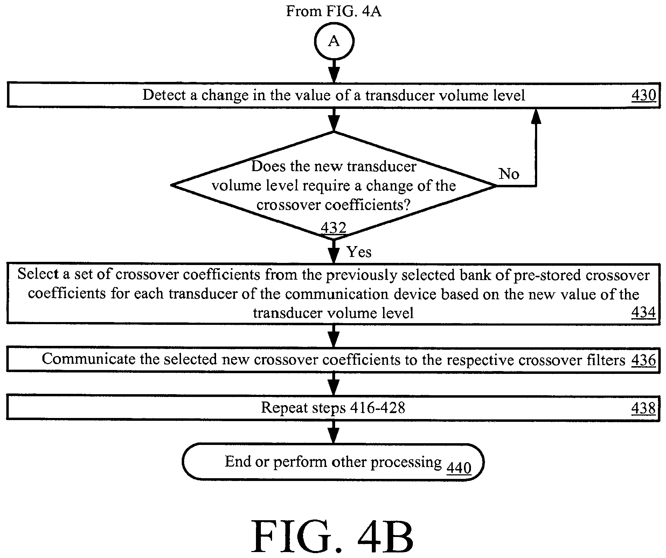

Referring now to FIG. 4, there is provided a flow diagram of an exemplary method 400 for transducer volume bias control. Method **400** begins with step **402** and continues with step **404** where an audio signal is obtained. The audio signal is to be output from a first transducer (e.g., transducer **102** of FIG. 1) and a second transducer (e.g., transducer **202** of FIG. 2) of a communication device (e.g., communication device **100** of FIG. 1). The first and second transducers are not co-axial, co-planar or co-located with each other. In this regard, the first transducer is disposed on a first side of the communication device, and the second transducer is disposed on a second side opposed from the first side of the communication device. Also, there is an imbalance between the capabilities of the first and second transducers.

In a next optional step **406**, the audio signal is processed to determine the type of audio contained therein (e.g., human speech or music). Based on the type of audio contained in the audio signal, a set of pre-stored crossover coefficients is selected in optional step **408** from a plurality of pre-stored sets of crossover coefficients. The selected set of pre-stored crossover coefficients is to be used for the dynamic re-assignment of frequency content to at least the first and second transducers of the communication device. In this regard, each crossover coefficient specifies high-range frequencies, mid-range frequencies or low-range frequencies for at least one signal to be created by a crossover filter (e.g., crossover filter **316** or **318** of FIG. 3).

Upon completing step **404** or **408**, step **410** is performed where the current value of a transducer volume level is determined. The transducer volume level can be manually changed using a rotary knob (e.g., rotary knob **116** of FIG. 1) or other user interface element of the communication device. Next, a set of crossover coefficients are selected for each transducer of the communication device based on the current value of the transducer volume level. The crossover coefficient is selected from the set of pre-stored crossover coefficients. In some scenarios, a single set of pre-stored crossover coefficients is stored in a memory (e.g., memory **314** of FIG. 3) of the communication device. In other scenarios, a plurality of sets of pre-stored crossover coefficients is stored in the memory. In this case, optional steps **406-408** are performed to select one of the pre-stored sets. The crossover coefficient is subsequently selected from the pre-stored set of crossover coefficients selected in optional step **408**.

The selected crossover coefficients are then communicated to the respective crossover filters (e.g., crossover filter **316** or **318** of FIG. 3), as shown by steps **416-420**. An audio signal is also communicated to the crossover filters. Notably, the audio signal may be time delayed prior to reaching at least one of the crossover filters, as shown by steps **415** and **418**. The time delay is performed to account for the physical differences in location and orientation between the first and second transducers.

At each crossover filter, the audio signal is processed in step **422** to create a plurality of digital signals consisting of separated bands of high-range, mid-range and/or low-range frequencies. For example, a crossover filter may create a first digital signal consisting of frequencies less than 1500 Hz and a second digital signal consisting of frequencies greater than 1500 Hz. The present solution is not limited to the particulars of this example.

The digital signals created by the crossover filters are then converted to analog signals and amplified, as shown by steps **424-426.** The amplified analog signal consisting of at high-range frequencies is communicated to the first transducer in step **428**. The amplified analog signal consisting of low-range frequencies is communicated to the second transducer in step **428**.

At a later time, the communication device detects a request for change in the value of the transducer volume level, as shown by step **430**. In response to such detection, a decision is made as to whether the new transducer volume level requires a change of the crossover coefficients. Such a change may be required if the new transducer volume level could possibly cause damage to one of the transducers. If the new transducer volume level does not require a change in the crossover coefficients [**432:NO**], then method **400** returns to step **430**. In contrast, if the new transducer volume level does require a change in the crossover coefficients [**432:YES**], then method **400** continues with steps **434-438**. These steps involve: selecting new crossover coefficients from a set of pre-stored crossover coefficients for each transducer of the communication device based on the new value of the transducer volume level; communicating the selected new crossover coefficients to the respective crossover filters; and repeating steps **416-428**. Upon completing step **438,** step **440** is performed where method **400** ends or other processing is performed.

The following EXAMPLE is provided in order to further illustrate the present solution. The scope of the present solution, however, is not to be considered limited in any way thereby.

### EXAMPLE

In some scenarios, the present solution is implemented in a portable radio. The portable radio comprises a primary speaker and a secondary speaker. The primary speaker is disposed on the front side of the portable radio, while the secondary speaker is disposed on the back side of the portable radio. The primary speaker has the following electrical characteristics: a resonant frequency of 650 Hz; a rated power level of 1.5 Watts; and a nominal DC impedence of 8 Ohms. The secondary speaker the following electrical characteristics: a resonant frequency of 550 Hz; a rated power level of 4.0 Watts; and a nominal DC impedance of 4 Ohms.

During operation, the communication device performs operations to dynamically change the spectral content that is provided to the primary and secondary speakers. This dynamical change of the spectral content is achieved by varying crossover coefficients in response to changes in the speaker volume level. The crossover filters may be designed in a complementary manner, using cutoff frequencies selected from the following TABLE stored in the memory of the communication device.

**TABLE**

| Crossover Frequency | System Volume |
|---|---|
| 700 Hz | < 50% |
| 1500 Hz | 50-75% |
| 2000 Hz | 75-85% |
| 2600 Hz | > 85% |

In view of the forgoing, the present solution resolves the issue of multiple speakers by providing a primary speaker that appears (perceptually) to have the most volume at the front of the electronic device at low volume levels. As the volume increases, the frequency content and volume bias is moved from the front of the electronic device to the rear of the electronic device (i.e., from the primary speaker to the secondary speaker). Perceptually, at the highest volume levels, it is difficult to tell where the sound is generated. At the highest volume level, the sound may appear to be generated from the rear or secondary speaker.

Advantageously, the present solution provides: high fidelity audio in a small-form factor electronic device; extended dynamic range of audio playback frequencies; an ability to optimize sound quality for specific listening positions (e.g., phase alignment of signals); and a higher level of audio configurability and user experience than conventional audio systems.

The present solution has many novel features. For example, the present solution comprises a speaker volume optimization scheme that takes advantage of multiple speakers through the use of frequency range and volume bias. Also, historically communication devices (e.g., radios) have required complicated algorithms to protect internal electro-acoustic transducers from damage. The present solution greatly simplifies this task by gracefully diverting spectral energy away from the system's most sensitive transducer(s) with simple adaptive filtering. The present solution can be extended to N transducers and N unique filters. Audio intelligibility is maximized (and preserved) when all transducers in the system operate below their limits for harmonic distortion for the entirety of the volume curve. The proposed solution ensures that as system volume is increased the more sensitive transducer(s) is(are) presented only with spectral content that will remain free from harmonic distortion.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above described embodiments. Rather, the scope of the invention should be defined in accordance with the following claims and their equivalents.

## Claims

1. A method for transducer volume bias control, comprising:
obtaining, by a processor, an audio signal that is to be output from first and second transducers of an electronic device, where the first transducer is disposed on a first side of the electronic device and the second transducer is disposed on a second side that is different than the first side of the electronic device; and
performing operations by the processor to dynamically change spectral content of the audio signal to at least one of the first and second transducers as a transducer volume level increases and decreases.

2. The method according to claim 1, wherein the first and second transducers have imbalanced capabilities.

3. The method according to claim 1, wherein the spectral content is dynamically changed by diverting higher energy audio content away from a low volume transducer in accordance with a current high transducer volume level.

4. The method according to claim 1, wherein the spectral content is dynamically changed by re-assigning frequency content to the first and second transducers based on a requested or detected change in the transducer volume level.

5. The method according to claim 1, wherein the spectral content is dynamically changed by re-assigning at least mid-level frequency content to the first and second transducers based on changes in the transducer volume level.

6. The method according to claim 1, wherein the spectral content is dynamically changed by varying values of crossover coefficients used by crossover filters to create a signal containing high-range frequencies and a signal containing low-range frequencies, based on changes in the transducer volume level.

7. The method according to claim 1, wherein the spectral content is dynamically changed by adjusting a configuration of discrete electrical components present in audio signal paths.

8. A method for transducer volume bias control, comprising:
obtaining, by a processor, an audio signal that is to be output from first and second transducers of an electronic device, where the first transducer is disposed on a first side of the electronic device and the second transducer is disposed on a second side that is different than the first side of the electronic device;
determining, by the processor, a value of a transducer volume level;
selecting, by the processor, at least one crossover coefficient for each said first and second transducers from a plurality of crossover coefficients based on the value of the transducer volume level;
communicating, from the processor to at least one crossover filter, the crossover coefficients for use in providing the first transducer with a first signal containing low-range frequencies and the second transducer with a second signal containing high-range frequencies;
detecting, by the processor, an adjustment in the value of the transducer volume level; and
performing operations by the processor to dynamically change the crossover coefficients in response to said adjustment and based on a new value of the transducer volume level.

9. An electronic device, comprising:
a first transducer disposed on a first side of the electronic device;
a second transducer disposed on a second side that is different than the first side of the electronic device; and
a processor configured to
detect when a transducer volume level is changed, and
dynamically change spectral content of an audio signal to at least one of the first and second transducers as a transducer volume level increases and decreases.
